(19) Europäisches Patentamt

European Patent Office

Office européen des brevets

(11) Veröffentlichungsnummer: **0 428 783 B1**

(12) # EUROPÄISCHE PATENTSCHRIFT

(45) Veröffentlichungstag der Patentschrift: **19.01.94**

(21) Anmeldenummer: **89121658.2**

(22) Anmeldetag: **23.11.89**

(51) Int. Cl.⁵: **H02P 7/747**

(54) **Spielfreier Mehrritzelantrieb.**

(43) Veröffentlichungstag der Anmeldung:
**29.05.91 Patentblatt 91/22**

(45) Bekanntmachung des Hinweises auf die
Patenterteilung:
**19.01.94 Patentblatt 94/03**

(84) Benannte Vertragsstaaten:
**AT BE CH DE ES FR GB GR IT LI LU NL SE**

(56) Entgegenhaltungen:
**EP-A- 0 076 359**
**CH-A- 660 101**
**DE-A- 1 438 964**
**DE-A- 2 229 850**
**DE-B- 1 290 232**

(73) Patentinhaber: **SIEMENS AKTIENGESELL-
SCHAFT**
**Wittelsbacherplatz 2**
**D-80333 München(DE)**

(72) Erfinder: **Keller, Christian, Dipl.-Ing.(FH)**
**Tellstrasse 22**
**D-8500 Nürnberg(DE)**
Erfinder: **Koopmann, Klaus, Dipl.-Ing.**
**Lärchenweg 3**
**D-8520 Erlangen(DE)**
Erfinder: **Neuffer, Ingemar, Dipl.-Ing.**
**Rudelsweiherstrasse 49**
**D-8520 Erlangen(DE)**

**Beschreibung**

Die Erfindung betrifft einen spielfreien Mehrritzelantrieb mit den Merkmalen des Oberbegriffs des Anspruchs 1.

Bei einem derartigen, aus der CH-A-660 101 bekannten Mehrritzelantrieb sind mehrere, auf ein Großrad wirkende Ritzel derart antriebsmäßig gegeneinander verspannt, daß bei einer Umkehr des Gesamtdrehmoments für das Großrad die einzelnen Ritzelantriebe nacheinander ihre jeweiligen Drehmomentrichtungen ändern und dementsprechend nacheinander einen Zahnflankenwechsel vornehmen. Um bei dem Zahnflankenwechsel die Zahnbeanspruchung am Ritzel bzw. Großrad zu begrenzen, wird das Solldrehmoment für den, den Zahnflankenwechsel ausführenden Ritzelantrieb begrenzt.

Der Erfindung liegt die Aufgabe zugrunde, trotz der Drehmomentbegrenzung bei Zahnflankenwechseln ein Anlaufen des Antriebs mit dem Gesamtsolldrehmoment des Antriebs zu ermöglichen.

Die Aufgabe wird gemäß der Erfindung durch die Merkmale des Anspruchs 1 gelöst.

Hierdurch wird in vorteilhafter Weise unter Ausnutzung der kurzfristigen höheren Belastbarkeit von Elektromotoren erreicht, daß ein Anlaufen nach einer elektrischen Verspannung oder bei einer Drehmomentumkehr, mit dem Höchstdrehmoment des Antriebs möglich ist.

In weiterer Ausgestaltung der Erfindung wird vorgesehen, daß die Drehmomentkennlinien der einzelnen Ritzel oder Ritzelgruppen unterschiedliche Steigungen aufweisen und die Steigungsänderungen und/oder Verlaufsänderungen der einzelnen Drehmoment-Kennlinien bei Erreichen vorgegebener Sollwerte erfolgen. Damit kann vorteilhaft eine vorgebbare Spreizung der Kennlinien für die Motoren und ein zeitlich gestaffelter Flankenwechsel der Ritzelzähne erfolgen.

Eine besonders vorteilhafte Realisation des erfindungsgemäßen Antriebs ergibt sich, wenn die Ritzelantriebsmotoren umrichtergespeiste Drehstrommotoren sind, deren Drehmoment- und Drehzahlregelung digital erfolgt. So sind vorteilhaft einfach die schnellen Umschaltvorgänge realisierbar.

Weiter Vorteile und Einzelheiten der Erfindung ergeben sich aus der nachfolgenden Beschreibung eines Ausführungsbeispiels, anhand der Zeichnungen und in Verbindung mit den weiteren Unteransprüchen. Es zeigen:

FIG 1    das Drehmomentdiagramm eines Antriebs mit vier in prinzipiell bekannter Weise gegeneinander verspannten Antriebsmotoren,

FIG 2    das Drehmomentdiagramm eines erfindungsgemäßen Antriebs mit zwei Antriebsgruppen und

FIG 3    ein Blockschaltbild eines erfindungsgemäßen Antriebs mit vier Antriebsmotoren.

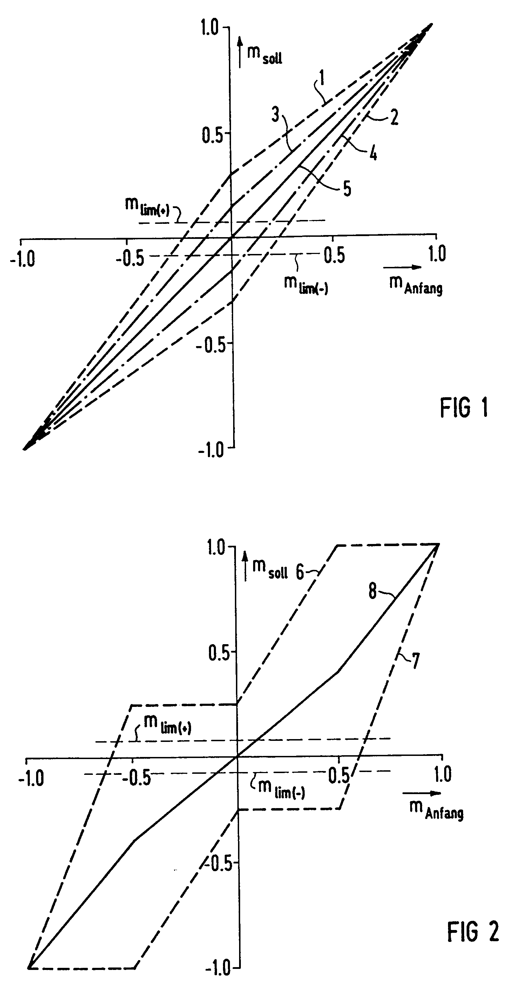

In FIG 1 sind die Drehmomentkennlinien der einzelnen Antriebsmotoren mit 1,2,3 und 4 bezeichnet. Wie ersichtlich, sind die Einzeldrehmomente von jeweils zwei Motoren bei dem Sollwert-Nulldurchgang gleich groß und gegeneinander gerichtet. Erfordert das Antriebssystem ein positives oder negatives Drehmoment, wird das Sollmoment der Gruppe erhöht, die bereits das vorzeichenrichtige Drehmoment entwickelt. Zusätzlich in das Diagramm eingezeichnet ist noch der Begrenzungswert ± $m_{lim}$ mit dem der geführte Flankenwechsel erfolgt. In FIG 1 und FIG 2 ist wie üblich

$$m = \frac{M}{M_{max}} \; .$$

Das Diagramm nach FIG 2, das für zwei Antriebsgruppen oder für zwei Einzelmotoren gilt, zeigt, wie die beiden Antriebsgruppen oder Einzelantriebe zusammenarbeiten. Die Kennlinien 6 und 7 der beiden Antriebsgruppen oder Einzelantriebe weisen jeweils einen Bereich mit konstantem Drehmoment auf, der erst verlassen wird, wenn die Drehzahlregelung einen vorherbestimmten Drehmomentenwert vorgibt, z.B. 0,5 $M_{max}$. Das Summenantriebsmoment ergibt sich entsprechend der Diagrammlinie 8. Es versteht sich, daß der Wert 0,5 $M_{max}$ willkürlich gewählt ist und, abhängig von den jeweiligen dynamischen Eigenschaften eines Antriebs, erheblich verkleinert werden kann. Zusätzlich in das Diagramm eingezeichnet ist noch der Begrenzungswert ± $m_{lim}$, mit dem der geführte Flankenwechsel erfolgt.

Zum Vermeiden eines zu hohen Drehzahlanstiegs beim Durchlaufen des Zahnspiels wird der Drehmomentsollwert nach dem Nulldurchgang der jeweiligen Kennlinie vorübergehend auf $m_{lim}$ begrenzt. Mit diesem Moment wird der Motor beschleunigt. Nach dem Ausgleich des Zahnspiels wird die Drehmomentbegrenzung wieder aufgehoben. Der in diesem Augenblick anstehende Sollwert wird über eine Rampenfunktion dem zugehörigen Drehmomentregler vorgeben. In der Zwischenzeit wird den übrigen Antriebsmotoren ein entsprechender Zusatzwert solange vorgegeben, bis der Motor nach dem Ausgleich des Zahnflankenspiels wieder sein Moment aufgebaut hat.

Durch die vorstehenden Maßnahmen wird vorteilhaft dem dynamischen Einzelverhalten der einzelnen Antriebe oder Antriebsgruppen Rechnung getragen und auch eine Überlastung der Getriebezähne mit Sicherheit vermieden. Dies gilt insbesondere für Getriebe, bei denen die Ritzel direkt von einem drehzahlgeregelten Motor angetrieben werden. Diese Antriebe sind besonders kritisch, da hier die Elastizität eines zwischengeschalteten Untersetzungsgetriebes entfällt, die zu einem automatisch gedämpften Flankenwechsel beim Durchlaufen des Zahnspiels führt.

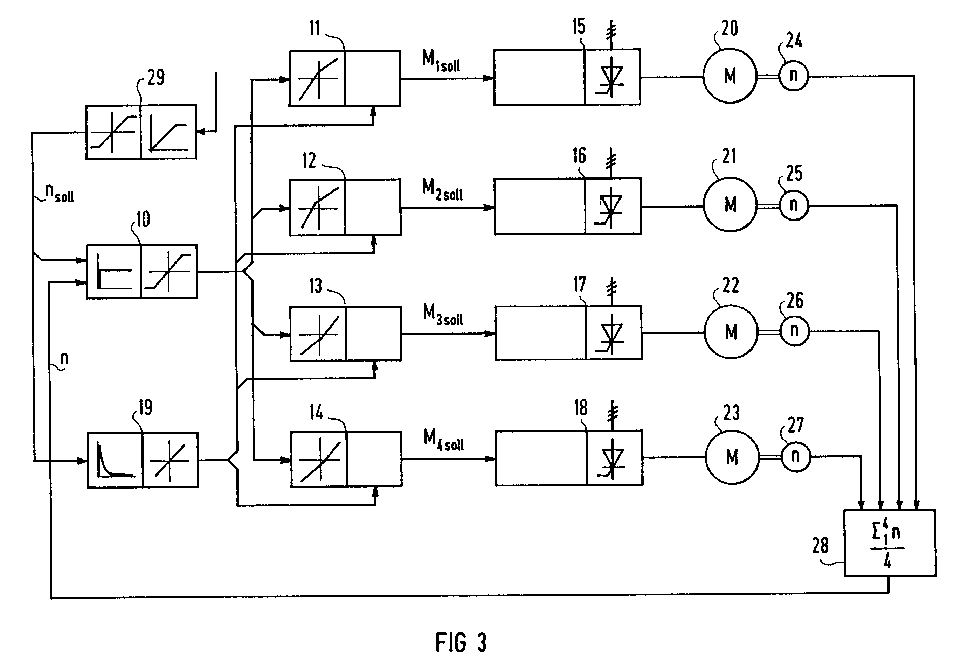

In FIG 3, dem Blockschaltbild, in dem die Funktionsblöcke mit regelungstechnisch üblichen Funktionssymbolen dargestellt sind, wird mit 10 der Drehzahlregler bezeichnet, während 19 den Beschleunigungsmomentengeber und 29 den Drehzahlsollwertgeber bezeichnen. Der Drehzahlsollwert wird ebenso wie der Drehzahlmittelwert, der in der Einheit 28 gebildet wird, dem Drehzahlregler 10 und auch vorteilhaft dem Beschleunigungsmomentengeber 19 aufgegeben. Der Drehzahlmittelwert wird aus den elektrischen Einzelwerten der Motoren 20-23 in Verbindung mit ihren Drehzahlgebern 24-27 gebildet. Die einzelnen Drehmomentensollwerte ergeben sich aus den Signalen der Regeleinheiten 11-14, denen die gewünschten Kennlinien eingegeben sind und die vorteilhaft auch die Umschaltlogik, vorzugsweise in Prozessorform, enthalten. Aus den Regeleinheiten 11-14 ergeben sich die Einzelsollwerte für das Drehmoment, die Regeleinheiten 15-18 der Motoren 20-23 aufgegeben werden.

Die erfindungsgemäße Regelung ist mit digitalen Mitteln besonders einfach und wirkungsvoll zu verwirklichen; es versteht sich jedoch für den Fachmann, daß auch eine analog arbeitende bzw. eine Hybridlösung möglich ist. Die entscheidenden Vorteile der erfindungsgemäßen Lösung, gesteuerter Flankenwechsel der Ritzel- und Großradzähne mit verringerter mechanischer Beanspruchung und nicht überdimensionierten Antriebsmotoren bleiben in allen Fällen erhalten.

**Patentansprüche**

1. Spielfreier Mehrritzelantrieb, z. B. für Bergbau-Tagebaugeräte, Konverter-Kippantriebe o.ä., insbesondere mit vier Ritzeln, die auf ein Großrad wirken, und mit über Sollwertkennlinien drehmomentgeregelten Antriebsmotoren (20, 21, 22, 23), die zum ruckfreien Ausgleich des Zahnflankenspiels beim Umsteuern oder Anfahren mindestens teilweise gegeneinander, nach dem Umsteuern oder Anfahren jedoch in gleicher Richtung wirken, wobei die einzelnen Ritzelantriebsmotoren (20, 21, 22, 23) während des Umsteuerns oder Anfahrens eine Drehmoment- und Drehzahlregelung aufweisen, die sie einen Zahnflankenwechsel zu unterschiedlichen Zeiten und mit vorherbestimmten Drehmomenten vornehmen läßt und dabei den Drehmomentensollwert des einen Flankenwechsel vornehmenden Ritzels während des Flankenwechsels begrenzt, **dadurch gekennzeichnet,** daß den Antriebsmotoren (20, 21, 22, 23), deren Ritzel keinen Zahnflankenwechsel durchführen, ein die Dremomentensollwert begrenzung während des Flankenwechsels ausgleichender Zusatzsollwert aufgegeben wird.

2. Mehrritzelantrieb nach Anspruch 1, **dadurch gekennzeichnet,** daß die Drehmomentkennlinien (6, 7) der einzelnen Ritzel oder Ritzelgruppen unterschiedliche Steigungen aufweisen.

3. Mehrritzelantrieb nach Anspruch 1 oder 2, **dadurch gekennzeichnet,** daß Steigungsänderungen und/oder Verlaufsänderungen der einzelnen Drehmomentkennlinien (6, 7) bei Erreichen vorgegebener Sollwerte erfolgen.

4. Mehrritzelantrieb nach einem der vorangehenden Ansprüche, **dadurch gekennzeichnet,** daß zur Kompensation des dynamischen Einflusses der Antriebskomponenten vom Motor bis zum jeweiligen Ritzel, den Drehmomentreglern ein Zusatzsollwert über eine Regeleinheit (19) aufgegeben wird.

5. Mehrritzelantrieb nach einem der vorangehenden Ansprüche, **dadurch gekennzeichnet,** daß die Steigungs- oder Verlaufsänderungen von dem Trägheitsmoment des Antriebs als Führungsgröße geführt werden.

6. Mehrritzelantrieb nach einem der vorangehenden Ansprüche, **dadurch gekennzeichnet,** daß die Drehmomentübertragung zwischen Antriebsmotor und Ritzel getriebelos erfolgt.

7. Mehrritzelantrieb nach einem der vorangehenden Ansprüche, **dadurch gekennzeichnet,** daß die Ritzelantriebsmotoren (20, 21, 22, 23) umrichtergespeiste Drehstrommotoren sind.

8. Mehrritzelantrieb nach einem der vorangehenden Ansprüche, **dadurch gekennzeichnet,** daß die Drehmoment- und Drehzahlregelung digital erfolgt.

## Claims

1. A backlash-free, multi-pinion drive, e.g. for opencast mining apparatus, converter tipper drives or the like, in particular having four pinions which act on a wheel and having drive motors (20,21,22,23) which are torque-controlled by way of desired value characteristics and which, for jolt-free compensation of the backlash of teeth, act at least partially against one another when reversing or starting up, but act in the same direction after reversing or starting up, wherein the individual pinion drive motors (20, 21, 22, 23) have torque control and rotational speed control during reversal or starting up, which control allows them to carry out a tooth flank change at different times and at predetermined torques, and thereby limiting the desired torque value of the pinion undertaking a flank change, during the flank change, characterised in that an additional desired value compensating the desired torque value limitation during the flank change is delivered to the drive motors (20, 21, 22, 23), the pinions of which do not carry out a tooth flank change.

2. A multi-pinion drive according to claim 1, characterised in that the torque characteristics (6, 7) of the individual pinions or pinion groups have varying gradients.

3. A multi-pinion drive according to claim 1 or 2, characterised in that gradient changes and/or curve changes of the individual torque characteristics (6, 7) take place when specified desired values are reached.

4. A multi-pinion drive according to one of the preceding claims, characterised in that, for compensation of the dynamic influence of the drive components from the motor to the respective pinion, an additional desired valve is delivered to the torque controllers via a control unit (19).

5. A multi-pinion drive according to one of the preceding claims, characterised in that the gradient changes or curve changes are guided by the moment of inertia of the drive as reference input variable.

6. A multi-pinion drive according to one of the preceding claims, characterised in that the torque transfer between drive motor and pinion takes place in a gearless manner.

7. A multi-pinion drive according to one of the preceding claims, characterised in that the pinion drive motors (20, 21, 22, 23) are inverter-fed three-phase a.c. current motors.

8. A multi-pinion drive according to one of the preceding claims, characterised in that the torque control and rotational speed control take place digitally.

## Revendications

1. Dispositif d'entraînement à pignons multiples sans jeu, par exemple pour des machines d'exploitation minière à ciel ouvert, des dispositifs d'entraînement pour le basculement de convertisseurs et analogues, comportant notamment quatre pignons qui agissent sur une grande roue et des moteurs d'entraînement (20,21,22,23), dont les couples sont réglés au moyen de courbes caractéristiques des valeurs de consigne et qui, pour la compensation sans à-coup du jeu entre les flancs des dents, agissent au moins en partie en des sens opposés, lors de l'inversion de la commande ou du démarrage, mais dans le même sens après l'inversion de la commande ou après le démarrage, les différents moteurs (20,21,22,23) d'entraînement des pignons étant soumis, pendant l'inversion de commande ou au démarrage, à une régulation du couple et de la vitesse de rotation, qui permet d'exécuter un changement des flancs des dents à des instants différents et avec des couples prédéterminés, et qui limite ainsi la valeur de consigne du couple d'un pignon, au niveau duquel est exécuté le changement de flanc, pendant cette opération de changement de flanc, caractérisé par le fait qu'une valeur de consigne supplémentaire, qui compense la limitation de la valeur de consigne du couple pendant le changement de flanc, est appliquée aux moteurs d'entraînement (20,21,22,23), dans les pignons desquels il ne se produit pas de changement des flancs des dents.

2. Dispositif d'entraînement à pignons multiples suivant la revendication 1, caractérisé par le fait que les courbes caractéristiques de couple (6,7) des différents pignons ou groupes de pignons possèdent des pentes différentes.

3. Dispositif d'entraînement à pignons multiples suivant la revendication 1 ou 2, caractérisé par le fait que des modifications de la pente et/ou des modifications de forme des différentes courbes caractéristiques (6,7) du couple s'effectuent lorsque des valeurs de consigne prédéterminées sont atteintes.

4. Dispositif d'entraînement à pignons multiples suivant l'une des revendications précédentes, caractérisé par le fait que pour la compensation de l'influence dynamique des composantes d'entraînement du moteur jusqu'au pignon respectif, une valeur de consigne supplémentaire est appliquée aux régulateurs de couple par l'intermédiaire d'une unité de régulation (19).

5. Dispositif d'entraînement à pignons multiples suivant l'une des revendications précédentes, caractérisé par le fait que les modifications de pente ou de forme sont exécutées au moyen du couple d'inertie du dispositif d'entraînement en tant que grandeur pilote.

6. Dispositif d'entraînement à pignons multiples suivant l'une des revendications précédentes, caractérisé par le fait que la transmission du couple entre le moteur d'entraînement et les pignons s'effectue sans dispositif de transmission.

7. Dispositif d'entraînement à pignons multiples suivant l'une des revendications précédentes, caractérisé par le fait que les moteurs (20,21,22,23) d'entraînement des pignons sont des moteurs à courant triphasé alimentés par un variateur de fréquence.

8. Dispositif d'entraînement à pignons multiples suivant l'une des revendications précédentes, caractérisé par le fait que la régulation du couple et de la vitesse de rotation s'effectue numériquement.

FIG 1

FIG 2

FIG 3

EP 0 428 783 B1